# FASCICULE DE BREVET EUROPEEN

(11) **EP 3 556 637 B1**
(45) Date de publication et mention de la délivrance du brevet: **07.05.2025**
(21) Numéro de dépôt: 19163354.4
(22) Date de dépôt: 18.03.2019
(51) Int. Cl.: B61L 29/30, G01D 9/00, B61L 3/00, B61L 29/04

(54) **BOITIER ÉLECTRONIQUE DESTINÉ À RETRACER L'HISTORIQUE D'UNE BARRIÈRE**
ELEKTRONISCHES STEUERGERÄT ZUM AUFZEICHNEN DER VERLAUFSDATEN EINER BARRIERE
ELECTRONIC UNIT INTENDED FOR TRACING THE HISTORY OF A BARRIER

(30) Priorité: 17.04.2018 FR 1853335
(43) Date de publication de la demande: 23.10.2019
(73) Titulaire: M.F.I., 94380 Bonneuil Sur Marne (FR)
(72) Inventeur: ESCOURROU, Pierre, 75013 Paris (FR)
(74) Mandataire: Ipsilon

(56) Documents cités:
- WO-A1-00/68896
- CN-A- 107 092 241
- JP-A- 2016 044 547
- PAUL SZACSVAY: "'Cerberus' Level Crossing Monitor and Test System - a 'black box recorder' for Railway Level Crossings", IRSE (INSTITUTE OF RAILWAY SIGNAL ENGINEERS) PROCEEDINGS 2002/2003, 29 April 2002 (2002-04-29), pages 84 - 91, XP055125712

## Description

L'invention se rapporte à un boitier électronique destiné à retracer l'historique d'une barrière. Une telle barrière peut par exemple être placée au niveau d'un passage à niveau, ou à l'entrée d'un site industriel ou à l'entrée d'un parking.

A titre d'exemple, les barrières placées au niveau d'un passage à niveau, sont amenées à être pilotées automatiquement entre une position d'ouverture et une position de fermeture en fonction du passage ou non d'un train. En effet, ces barrières se ferment un peu avant le passage d'un train pour empêcher les véhicules automobiles de traverser la voie, et s'ouvrent automatiquement juste après le passage dudit train, pour permettre auxdits véhicules de circuler à nouveau.

Or, il peut arriver que des accidents se produisent au niveau de cette barrière quand par exemple le chauffeur pense qu'il a le temps de traverser la voie de chemin de fer alors que la barrière a déjà amorcé un mouvement de fermeture. Dans ce genre de situation, le véhicule va par exemple percuter la barrière en phase de fermeture, ou se retrouver coincé sur la voie de chemin de fer, entre les deux barrières fermées placées de part et d'autre de la voie. De tels accidents peuvent également se produire lors d'un fonctionnement défectueux de la barrière, qui peut soudainement amorcer un mouvement de fermeture alors que rien ne le laisse supposer. Comme on peut le constater, les situations d'accident avec une barrière automatique et impliquant un piéton, un cycliste ou un véhicule automobile, sont très nombreuses et variées et peuvent avoir des conséquences dramatiques.

Une fois qu'un tel accident s'est produit, il est donc très important de remonter précisément au scénario ayant conduit à cet accident, de manière à pouvoir notamment établir la responsabilité des différentes parties impliquées.

Le document WO00/68896 A1 se rapporte à un dispositif permettant le contrôle d'ouverture et fermeture des portes ainsi que l'affichage, en particulier pour le contrôle de location d'appartement.

La publication JP2016044547A décrit notamment un boitier électronique indépendant que l'on positionne sur une porte automatique dans le but de retracer l'historique de la porte.

L'invention a pour objet un boitier électronique destiné à être solidarisé à une barrière automatique dans le but de retracer l'historique de ladite barrière sur une période donnée, après qu'un accident se soit produit. L'invention est telle que définie dans la revendication 1.

Selon l'invention, ledit boitier électronique comprend au moins un moyen de détection d'un passage de véhicule à choisir parmi un microphone, un capteur ultrasons, un magnétomètre, un capteur hyperfréquence et un capteur infrarouge, les données de détection de passage de véhicule complétant les mesures réalisées par les autres capteurs présents dans le boitier électronique, le au moins un capteur de mouvement comprenant un inclinomètre.

Un tel boitier est assimilable à une boite noire permettant de déterminer avec précision le scénario ayant conduit à un accident impliquant la barrière, à partir de la mesure de paramètres physiques et dynamiques concernant ladite barrière. Préférentiellement, la barrière est automatique et fonctionne sur commande pour passer d'une position d'ouverture à une position de fermeture et inversement. Avec un tel boitier, il est donc possible de savoir si la barrière était fixe dans une position ouverte ou dans une position fermée, ou en phase de mouvement ascendant ou descendant lors de l'accident. Il est également possible de savoir si la barrière a subi un choc violent ou limité et quel a été la réaction de ladite barrière suite à ce choc : accélération, déformation ou rupture. Les mesures du capteur de mouvement et du capteur de choc ainsi que l'heure précise fournie par l'horloge, sont des données qui sont traitées par le microcontrôleur et qui sont ensuite stockées dans la mémoire. Ces informations sont ensuite accessibles au moyen d'un appareil électronique pouvant se connecter au moyen d'une liaison filaire ou sans fil audit boitier. Il peut également être envisagé de se connecter à une application informatique dédiée, dans laquelle le boitier électronique serait référencé. Un simple clic sur ladite référence permet alors d'accéder aux données stockées dans ledit boitier. L'étui est inviolable et un passant ne peut pas l'ouvrir sans le détruire. L'étui est étanche de manière à empêcher l'eau de pluie et/ou l'humidité de pénétrer dans le boitier, ce qui aurait pour conséquence d'entraver le fonctionnement de tous les composants du boitier. L'horloge fournit l'heure en temps réel et est indexé sur une horloge universelle. La source énergétique est destinée à alimenter en électricité tous les composants du boitier électronique ayant besoin de courant électrique pour fonctionner. Cette source énergétique peut être embarquée dans le boitier sous la forme d'une pile, ou être constitué par le réseau électrique national. Dans ce deuxième cas, un câble électrique dudit réseau alimente en électricité le boitier électronique.

De façon préférentielle, le capteur de mouvement comprend également un capteur de vitesse.

Préférentiellement, le capteur de choc comprend un accéléromètre.

De façon avantageuse, un boitier électronique selon l'invention comprend au moins un capteur supplémentaire logé dans l'étui et à choisir parmi un capteur de température, un capteur d'humidité et un capteur de pression. Ces capteurs viennent compléter le capteur de mouvement et le capteur de choc déjà présents dans l'étui, et ont pour but de savoir dans l'élaboration du scénario d'accident, si le sol était mouillé ou glissant, s'il pouvait y avoir du brouillard ou une grosse pluie susceptible de gêner la vue d'un conducteur.

Avantageusement, l'étui est réalisé en métal. Les différents composants du boitier électronique sont noyés dans un matériau isolant, permettant de séparer lesdits composants et l'étui métallique. L'étui va ainsi isoler les différents composants d'un rayonnement électromagnétique.

De façon préférentielle, l'étui est parallélépipédique et possède une épaisseur inférieure à 20mm. Avantageusement, cette épaisseur est inférieure à 10mm et dans un mode de réalisation préféré d'un boitier selon l'invention, ladite épaisseur est inférieure à 5mm. Le boitier est sensé être plaqué contre la barrière sans créer une marche ou une quelconque protubérance. Il doit se fondre dans la barrière, sans l'alourdir et sans accroitre son encombrement. Préférentiellement, un boitier selon l'invention a les dimensions d'une carte de crédit.

Préférentiellement, la source énergétique est à choisir parmi une pile haute capacité, une cellule photovoltaïque ou un accumulateur rechargeable. De cette manière, le boitier électronique est complétement autonome et n'a pas besoin d'être connecté à un réseau de courant électrique.

De façon avantageuse, la récupération des données stockées dans la mémoire s'effectue à partir d'un moyen à choisir parmi un connecteur, une transmission non filaire et une connexion filaire. Tous les moyens actuels de transmission de données, filaires ou sans fil, peuvent convenir dans le cadre d'un boitier selon l'invention. Ainsi, le boitier peut être équipée d'une prise, qui peut par exemple être un port USB. On peut également se connecter au boitier au moyen d'une connexion wifi, Bluetooth, ou autre à partir d'un appareil électronique de type ordinateur, tablette ou téléphone. On peut également envisager de se connecter à une application informatique dédiée, dans laquelle le boitier électronique serait repéré au moyen un numéro de référence. Un simple clic sur ledit numéro permettrait alors d'accéder aux données enregistrées dans ladite mémoire.

Avantageusement, un témoin de charge est placé sur l'étui. Il peut par exemple s'agir d'un voyant lumineux permanent, qui va par exemple changer de couleur ou clignoter si la source énergétique du boitier est sur le point de se tarir.

Le boitier comprend au moins un moyen de détection d'un passage de véhicule à choisir parmi un microphone, un capteur ultrasons, un magnétomètre, un capteur hyperfréquence et un capteur infrarouge. Un tel moyen de détection permet par exemple de savoir sans ambiguïté si un train était en phase de roulage lors d'un accident, ou s'il était à l'arrêt ou en phase de décélération. Ce moyen permet également de savoir par exemple, si un véhicule de type voiture ou deux-roues était en phase de roulage lors d'un accident, ou s'il était à l'arrêt ou en phase de décélération. Ce moyen de détection va avantageusement compléter les mesures réalisées par les autres capteurs présents dans le boitier électronique, afin de renforcer et/ou d'affiner un scénario d'accident.

Préférentiellement, le boitier comprend au moins un moyen de détection d'un mouvement de la barrière à choisir parmi un magnétomètre et un gyromètre. Ce moyen de détection du mouvement de la barrière permet également de renforcer et/ou d'affiner un scénario d'accident ébauché à partir des mesures déjà réalisées par le boitier.

De façon avantageuse, le boitier comprend un moyen d'identification de sa localisation sur une carte et un moyen permettant de donner l'heure des enregistrements des différentes mesures. En supposant par exemple que toutes les barrières de chemin de fer soient équipées d'un boitier électronique selon l'invention, il est en effet fondamental de prendre en considération de façon sûre et indiscutable, le boitier équipant la barrière au niveau de laquelle s'est produit un accident.

Avantageusement, le boitier comprend un moyen commun permettant à la fois d'identifier sa localisation et de donner l'heure des enregistrements, sous la forme d'un GPS. En effet, si le boitier était équipé d'un GPS, il est facile et rapide de le localiser avec précision sur un plan sans le confondre avec un autre boitier.

L'invention a pour autre objet un ensemble constitué par une barrière et au moins un boitier conforme à l'invention.

Selon l'invention, ledit au moins un boitier est solidarisé à ladite barrière avec un moyen à choisir parmi un vissage, un adhésif double face, un collage et une soudure. En effet, il faut que cette liaison soit stable dans le temps et qu'elle présente une certaine robustesse. Plusieurs boitiers peuvent être solidarisés à la barrière.

Un boitier électronique selon l'invention présente l'avantage de fournir des données sur les paramètres physiques et dynamiques d'une barrière, comme par exemple sa vitesse et l'intensité d'un choc qu'elle aurait reçu, tout en étant léger et peu encombrant. Il a de plus l'avantage de fournir des données complètes permettant d'établir avec sureté et précision un scénario d'accident réaliste, voire indiscutable.

On donne, ci-après, une description détaillée d'un mode de réalisation préféré d'un boitier électronique selon l'invention en se référant à la figure suivante :

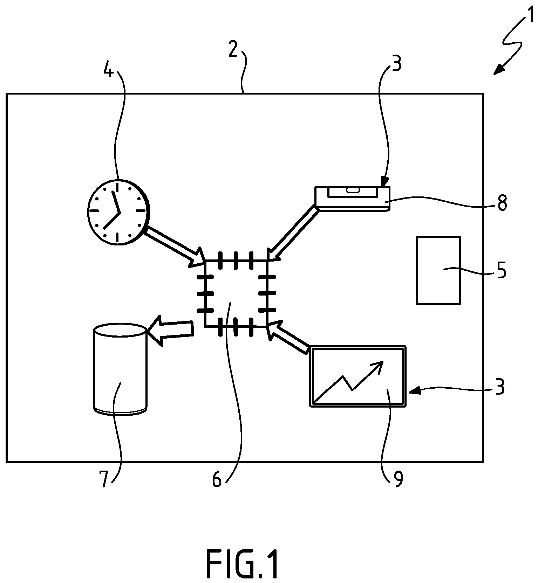

- La figure 1 est une vue schématique d'un boitier électronique selon l'invention.

Un boitier électronique 1 selon l'invention est destiné à être fixé à une barrière, préférentiellement à une barrière automatique fonctionnant sur commande, et apte à passer d'une position d'ouverture à une position de fermeture. A titre d'exemple, dans une position de fermeture la barrière peut s'étendre horizontalement et a pour but d'empêcher le passage de véhicules, de cyclistes ou de piétons. Dans la position d'ouverture, elle peut s'étendre plutôt suivant un axe vertical pour permettre le passage de ces véhicules, de ces cyclistes ou de ces piétons.

Plus généralement, un boitier électronique 1 selon l'invention peut s'adapter à tout type de barrière automatique apte à passer d'une position d'ouverture à une position de fermeture. De façon non exhaustive, une telle barrière peut être constituée par une barrière de passage à niveau, une barrière d'une station de péage d'autoroute, ou un portail.

Pour appel, ce boitier électronique a pour objet d'enregistrer en continu dans le temps, un certain nombre de paramètres reflétant l'état de la barrière pour, dans le cadre d'un accident impliquant ladite barrière, remonter au scénario le plus réaliste possible ayant conduit à cet accident. De cette manière, il devient possible d'établir la responsabilité des différents protagonistes impliqués dans cet accident. Ce boitier 1 agit comme un mouchard et est assimilable à une boite noire d'un aéronef.

En se référant à la figure 1, un boitier électronique 1 selon l'invention est délimité par un étui 2 étanche préférentiellement réalisé en métal. Cet étui 2 est fermé et étanche, de manière à empêcher le passage de l'eau de pluie ou de l'humidité vers l'intérieur de cet étui 2. Avantageusement, cet étui 2 est de forme parallélépipédique et possède une épaisseur inférieure à 20mm, préférentiellement inférieure à 10mm, et de façon préférentielle inférieure à 5mm. L'épaisseur constitue la dimension de l'étui 2 la plus faible. Pour les deux autres dimensions, à savoir la largeur et la longueur, l'étui 2 a le format d'une carte à puce standard plus ou moins 20% pour chacune de ces dimensions. Cet étui 2 est réputé être inviolable, un passant ne pouvant pas avoir accès aux informations stockées dans le boitier électronique 1.

Cet étui 2 renferme des équipements de mesure 3, une horloge 4, une source énergétique 5, un microcontrôleur 6 et une mémoire 7 de stockage des données acquises.

Les équipements de mesure 3 comprennent au moins un capteur de mouvement 8 et au moins un capteur de choc 9. Le capteur de mouvement 8 comprend un inclinomètre. Le capteur de choc 9 peut par exemple être constitué par un accéléromètre. Ces capteurs 8, 9 permettent à chaque instant :
- De connaitre la position de la barrière,
- De savoir si la barrière est fixe ou en mouvement,
- Si elle est en mouvement, de savoir avec quelle vitesse et dans quel sens,
- De savoir si la barrière a subi un choc accidentel, et si oui, avec quelle intensité et dans quel sens,
- De connaitre la réaction (déplacement et/ou déformation et/ou rupture) de la barrière suite à ce choc,
- Etc.

Dans une version plus sophistiquée, les équipements de mesure 3 peuvent comprendre au moins un capteur supplémentaire à choisir parmi un capteur de température, un capteur d'humidité et un capteur de pression. De façon non-exhaustive, ces capteurs supplémentaires apportent des informations sur la météorologie au moment de l'accident, et permettent notamment de savoir s'il pleuvait, ou s'il neigeait ou s'il y avait du brouillard. Ils peuvent donc permettre de savoir si la chaussée était mouillée au moment de l'accident, ou si elle était glissante. Ils peuvent également permettre de savoir si la visibilité était bonne.

Il n'est pas exclu d'introduire d'autres capteurs de mesure dans l'étui 2, de manière à compléter et à peaufiner les scénarios d'accident.

L'horloge 4 fournit l'heure en temps réel et de façon continue, et peut par exemple être radio-pilotée ou pilotée par satellite. Cette horloge 4 est indexée sur l'heure universelle, de façon à ne pas introduire d'écart avec cette heure universelle. Il est fondamental que le boitier électronique 1 puisse apporter des informations fiables dans le temps, car le timing est un paramètre crucial dans l'établissement d'un scénario d'accident.

La source énergétique 5 est préférentiellement constituée par un élément autonome à choisir parmi une pile haute capacité, une cellule photovoltaïque ou un accumulateur rechargeable. De cette manière, le boitier électronique est complètement indépendant et autonome. Il n'est cependant pas à exclure, que le boitier électronique 1 puisse se connecter à un réseau électrique à l'aide d'un câble, le rendant ainsi tributaire de ce réseau.

L'étui 2 du boitier électronique 1 peut être équipé d'un voyant lumineux connecté électriquement à la source énergétique 5 et visible depuis l'extérieur dudit boitier 1. Ce voyant lumineux peut par exemple comprendre au moins une LED, et peut, soit changer de couleur ou clignoter si l'état de charge de la source énergétique 5 se retrouve sous une valeur seuil.

Le microcontrôleur 6 traite les informations recueillies par les différents capteurs 8, 9 et les stocke dans la mémoire 7.

Une fois qu'un accident s'est produit, l'accès aux informations stockées dans la mémoire 7 peut s'effectuer par tous les moyens disponibles actuellement. De façon non-exhaustive, ces moyens peuvent par exemple impliquer :
- Une prise réalisée dans l'étui 2 et connectée directement à la mémoire 7 du boitier 1. De façon générale, cette prise doit permettre de connecter un appareil électronique apte à lire les données contenues dans la mémoire 7 et acquises au cours du temps. A titre d'exemple, cette prise peut par exemple être représentée par un port USB, et l'appareil électronique peut être représenté par un ordinateur ou une clé USB
- Un réseau sans fil, par exemple de type wifi. Le boitier électronique 1 est identifiable par wifi et il suffit alors de cliquer sur la référence de ce boitier 1, pour accéder aux informations contenues dans la mémoire 7.
- Une application internet dédiée. Il suffit alors de se connecter à cette application, affichant par exemple la référence du boitier 1 et de cliquer sur cette référence.
- Etc..

Un boitier électronique 1 selon l'invention est destiné à être arrimé de façon étroite et robuste à la barrière, par exemple au moyen d'un puissant adhésif double face. La barrière peut supporter plusieurs boitiers électroniques 1 selon l'invention.

Il est à préciser que les différents composants 3, 4, 5, 6, 7, 8, 9 d'un boitier électronique 1 selon l'invention, sont noyés dans un matériau isolant occupant l'étui 2 et séparant lesdits composants dudit étui 2 métallique. L'étui métallique a pour objet d'isoler les composants du boitier électronique 1 de toute perturbation électromagnétique.

## Revendications

1. Boitier électronique (1) destiné à être solidarisé à une barrière automatique dans le but de retracer l'historique de ladite barrière, ledit boitier comprenant un étui (2) étanche enfermant des composants parmi lesquels au moins un capteur de mouvement (8), au moins un capteur de choc (9), une horloge (4), un microcontrôleur (6), une source énergétique (5), et une mémoire (7) permettant audit microcontrôleur (6) de stocker les mesures desdits capteurs (8, 9) en fonction du temps, ledit boitier étant **caractérisé en ce qu'**il comprend au moins un moyen de détection d'un passage de véhicule à choisir parmi un microphone, un capteur ultrasons, un magnétomètre, un capteur hyperfréquence et un capteur infrarouge, les données de détection de passage de véhicule complétant les mesures réalisées par les autres capteurs présents dans le boitier électronique, et **en ce que** le au moins un capteur de mouvement (8) comprend un inclinomètre.

2. Boitier électronique selon la revendication 1, **caractérisé en ce que** le capteur de mouvement (8) comprend également un capteur de vitesse.

3. Boitier électronique selon l'une quelconque des revendications 1 ou 2, **caractérisé en ce que** le capteur de choc (9) comprend un accéléromètre.

4. Boitier électronique selon l'une quelconque des revendications 1 à 3, **caractérisé en ce qu'**il comprend au moins un capteur supplémentaire logé dans l'étui (2) et à choisir parmi un capteur de température, un capteur d'humidité et un capteur de pression.

5. Boitier électronique selon l'une quelconque des revendications 1 à 4, **caractérisé en ce que** l'étui (2) est réalisé en métal.

6. Boitier électronique selon l'une quelconque des revendications 1 à 5, **caractérisé en ce que** l'étui (2) est parallélépipédique et possède une épaisseur inférieure à 20mm.

7. Boitier électronique selon l'une quelconque des revendications 1 à 6, **caractérisé en ce que** la source énergétique (5) est à choisir parmi une pile haute capacité, une cellule photovoltaïque ou un accumulateur rechargeable.

8. Boitier électronique selon l'une quelconque des revendications 1 à 7, **caractérisé en ce que** la récupération des données stockées dans la mémoire (7) s'effectue à partir d'un moyen à choisir parmi un connecteur, une transmission non filaire et une connexion filaire.

9. Boitier électronique selon l'une quelconque des revendications 1 à 8, **caractérisé en ce qu'**un témoin de charge est placé sur l'étui (2).

10. Boitier électronique selon l'une quelconque des revendications 1 à 9, **caractérisé en ce qu'**il comprend au moins un moyen de détection d'un mouvement de la barrière à choisir parmi un magnétomètre et un gyromètre.

11. Boitier électronique selon l'une quelconque des revendications 1 à 10, **caractérisé en ce qu'**il comprend un moyen d'identification de sa localisation sur une carte et un moyen permettant de donner l'heure des enregistrements des différentes mesures.

12. Boitier électronique selon la revendication 11, **caractérisé en ce que** qu'il comprend un moyen commun permettant à la fois d'identifier sa localisation et de donner l'heure des enregistrements sous la forme d'un GPS.

13. Ensemble constitué par une barrière et au moins un boitier conforme à l'une quelconque des revendications 1 à 12, **caractérisé en ce que** ledit au moins un boitier (1) est solidarisé à ladite barrière avec un moyen à choisir parmi un vissage, un adhésif double face, un collage et une soudure.

## Patentansprüche

1. Elektronische Box (1), die dazu bestimmt ist, mit einer automatischen Schranke verbunden zu werden, um den chronologischen Verlauf der Schranke zu verfolgen, die Box umfassend eine wasserdichte Hülle (2), die Komponenten umschließt, darunter mindestens einen Bewegungssensor (8), mindestens einen Aufprallsensor (9), eine Uhr (4), einen Mikrocontroller (6), eine Energiequelle (5) und einen Speicher (7), der es dem Mikrocontroller (6) ermöglicht, die Messungen der Sensoren (8, 9) abhängig von der Zeit zu speichern, wobei die Box **dadurch gekennzeichnet ist, dass** sie mindestens eine Einrichtung zum Erfassen eines vorbeifahrenden Fahrzeugs umfasst, die aus einem Mikrofon, einem Ultraschallsensor, einem Magnetometer, einem Mikrowellensensor und einem Infrarotsensor auszuwählen ist, wobei die Daten zum Erfassen eines vorbeifahrenden Fahrzeugs, die Messungen ergänzen, die von den anderen Sensoren durchgeführt werden, die in der elektronischen Box vorhanden sind, und dass der mindestens eine Bewegungssensor (8) einen Neigungsmesser umfasst.

2. Elektronische Box nach Anspruch 1, **dadurch gekennzeichnet, dass** der Bewegungssensor (8) auch einen Geschwindigkeitssensor umfasst.

3. Elektronische Box nach einem der Ansprüche 1 oder 2, **dadurch gekennzeichnet, dass** der Aufprallsensor (9) einen Beschleunigungsmesser umfasst.

4. Elektronische Box nach einem der Ansprüche 1 bis 3, **dadurch gekennzeichnet, dass** sie mindestens einen zusätzlichen Sensor umfasst, der in der Hülle (2) untergebracht ist und aus einem Temperatursensor, einem Feuchtigkeitssensor und einem Drucksensor auszuwählen ist.

5. Elektronische Box nach einem der Ansprüche 1 bis 4, **dadurch gekennzeichnet, dass** die Hülle (2) aus Metall gefertigt ist.

6. Elektronische Box nach einem der Ansprüche 1 bis 5, **dadurch gekennzeichnet, dass** die Hülle (2) quaderförmig ist und eine Stärke von weniger als 20 mm besitzt.

7. Elektronische Box nach einem der Ansprüche 1 bis 6, **dadurch gekennzeichnet, dass** die Energiequelle (5) aus einer Hochleistungsbatterie, einer photovoltaischen Zelle oder einem wiederaufladbaren Akkumulator auszuwählen ist.

8. Elektronische Box nach einem der Ansprüche 1 bis 7, **dadurch gekennzeichnet, dass** das Abrufen der in dem Speicher (7) gespeicherten Daten anhand einer Einrichtung durchgeführt wird, die aus einem Verbinder, einer nicht drahtgebundenen Übertragung und einer drahtgebundenen Verbindung auszuwählen ist.

9. Elektronische Box nach einem der Ansprüche 1 bis 8, **dadurch gekennzeichnet, dass** auf der Hülle (2) eine Ladeanzeige platziert ist.

10. Elektronische Box nach einem der Ansprüche 1 bis 9, **dadurch gekennzeichnet, dass** sie mindestens eine Einrichtung zum Erfassen einer Bewegung der Schranke umfasst, die aus einem Magnetometer und einem Gyrometer auszuwählen ist.

11. Elektronische Box nach einem der Ansprüche 1 bis 10, **dadurch gekennzeichnet, dass** sie eine Einrichtung zum Identifizieren ihres seines Standorts auf einer Karte und eine Einrichtung zum Angeben der Uhrzeit der Aufzeichnungen der verschiedenen Messungen umfasst.

12. Elektronische Box nach Anspruch 11, **dadurch gekennzeichnet, dass** sie eine gemeinsame Einrichtung umfasst, die sowohl die Identifizierung ihres Standorts als auch die Angabe der Uhrzeit der Aufzeichnungen in Form eines GPS ermöglicht.

13. Anordnung, bestehend aus einer Schranke und mindestens einer Box gemäß einem der Ansprüche 1 bis 12, **dadurch gekennzeichnet, dass** die mindestens eine Box (1) mittels einer Einrichtung mit der Schranke verbunden ist, die aus Verschrauben, doppelseitigem Klebeband, Kleben und Schweißen auszuwählen ist.

## Claims

1. An electronic unit (1) intended to be secured to an automatic barrier in order to trace the history of said barrier, said unit comprising a sealed casing (2) containing components including at least one motion sensor (8), at least one impact sensor (9), a clock (4), a microcontroller (6), an energy source (5), and a memory (7) allowing said microcontroller (6) to store the measurements of said sensors (8, 9) according to the time, said unit being characterized it comprises at least one means for detecting the passage of a vehicle to be selected from a microphone, an ultrasonic sensor, a magnetometer, a microwave sensor and an infrared sensor, the vehicle passage detection data completing the measurements done by the other sensors present in the electronic unit, and in that the at least one motion sensor (8) comprises an inclinometer.

2. The electronic unit according to claim 1, **characterized in that** the motion sensor (8) also comprises a speed sensor.

3. The electronic unit according to any one of claims 1 or 2, **characterized in that** the impact sensor (9) comprises an accelerometer.

4. The electronic unit according to any one of claims 1 to 3, **characterized in that** it comprises at least one additional sensor housed in the casing (2) and to choose selected from a temperature sensor, a humidity sensor and a pressure sensor.

5. The electronic unit according to any one of claims 1 to 4, **characterized in that** the casing (2) is made of metal.

6. The electronic unit according to any one of claims 1 to 5, **characterized in that** the casing (2) is parallelepiped and has a thickness of less than 20 mm.

7. The electronic unit according to any one of claims 1 to 6, **characterized in that** the energy source (5) is to be selected from a high-capacity battery, a photovoltaic cell or a rechargeable battery.

8. The electronic unit according to any one of claims 1 to 7, **characterized in that** the recovery of the data stored in the memory (7) is performed from a means to be selected from a connector, a non-wired transmission and a wired connection.

9. The electronic unit according to any one of claims 1 to 8, **characterized in that** a charge indicator is placed on the casing (2).

10. The electronic unit according to any one of claims 1 to 9, **characterized in that** it comprises at least one means for detecting a movement of the barrier to be selected from a magnetometer and a gyrometer.

11. The electronic unit according to any one of claims 1 to 10, **characterized in that** it comprises means for identifying its location on a map and means for giving the time of the recordings of the various measurements.

12. The electronic unit according to claim 11, **characterized in that** it comprises a common means for both identifying its location and giving the time of the recordings in the form of a GPS.

13. An assembly consisting of a barrier and at least one unit according to any one of claims 1 to 12, **characterized in that** said at least one unit (1) is secured to said barrier with a means to selected from screwing, double-sided adhesive, bonding and welding.
